# EUROPEAN PATENT APPLICATION

(11) **EP 4 319 396 A1**
(43) Date of publication of application: **07.02.2024**
(21) Application number: 22778531.8
(22) Date of filing: 11.03.2022
(51) Int. Cl.: H04W 72/04

(54) **METHOD TRANSMITTING UCI ON PUSCH, TERMINAL, AND DEVICE**

(30) Priority: 02.04.2021 CN 202110359696
(71) Applicant: Datang Mobile Communications Equipment Co., Ltd., Beijing 100085 (CN)
(72) Inventor: GAO, Xuejuan, Beijing 100085 (CN); SI, Qianqian, Beijing 100085 (CN)
(74) Representative: Körfer, Thomas
(86) International application number: PCT/CN2022/080462
(87) International publication number: WO 2022/206347

(57) **Abstract**

Disclosed in the present invention are a method transmitting UCI on a PUSCH, a terminal, and a device, for use in solving the problem of how to select one PUSCH from multiple PUSCHs having different priorities to bear UCI on a PUCCH when the situation that the multiple PUSCHs having different priorities simultaneously overlap with one PUCCH in time domain exists. The method comprises: determining that a PUCCH bearing UCI and multiple PUSCHs having different physical-layer priorities overlap in time domain resources; selecting one PUSCH from the multiple PUSCHs according to a predetermined selection rule, or selecting a PUSCH having the same physical-layer priority as the PUCCH from the multiple PUSCHs; and transmitting the UCI by means of the selected PUSCH.

## Description

### Cross Reference to Related Application

The application claims priority to Chinese patent application No. 202110359696.7, filed with the China National Intellectual Property Administration on April 2, 2021 and entitled *"*Method, Terminal and Device for UCI Transmission on PUSCH*"*, the entire contents of which are incorporated herein by reference.

### Technical Field

The disclosure relates to the field of wireless communication technologies, and in particular to a method, terminal and device for UCI transmission on PUSCH.

### Background

In the 5^{th} Generation New RAT (5G NR), uplink channel transmissions with different physical layer priorities are supported. There may be resource conflicts between uplink channels with different physical layer priorities for the same terminal, such as the overlap between symbols occupied by uplink channels with different priorities on the same carrier. In Release 16 (Rel-16) version, it is specified that only the channel with high physical layer priority among the conflicted channels is communicated and the channel with low physical layer priority is dropped. In Release 17 (Rel-17) version, in order to avoid dropping uplink control information (UCI) on the channel with low priority, multiplexed transmission of uplink channels with different physical layer priorities may be supported.

When uplink channels with different physical layer priorities overlap with each other in time domain, and multiplexed transmission of uplink channels with different priorities is supported, multiple physical uplink shared channels (PUSCHs) with different priorities may simultaneously overlap with one physical uplink control channel (PUCCH) in time domain, in this case, there is no clear method for how to select one PUSCH from the multiple PUSCHs with different priorities to carry the UCI on the PUCCH.

### Summary

The disclosure provides a method, terminal and device for UCI transmission on PUSCH, which are used to solve the problem of how to select one PUSCH from multiple PUSCHs with different priorities to carry the UCI on the PUCCH when the multiple PUSCHs with different priorities simultaneously overlap with one PUCCH in time domain.

In a first aspect, embodiments of the disclosure provide a method for UCI transmission on PUSCH. The method includes: determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and communicating the UCI over the selected PUSCH.

The embodiments of the disclosure provide two methods for selecting a PUSCH to carry UCI on PUCCH. One is to select one PUSCH from the plurality of PUSCHs according to a preset selection rule, and the other is to select a PUSCH with a physical layer priority same as a physical layer priority of the PUCCH from the plurality of PUSCHs, so as to solve the problem of how to select one PUSCH from multiple PUSCHs to communicate the UCI on the PUCCH when the PUCCH overlaps with the multiple PUSCHs with different priorities in time domain resources. The embodiments are applied to a terminal. After selecting one PUSCH to communicate the UCI carried on the PUCCH through the above two methods, the UCI is communicated through the selected PUSCH.

In an optional embodiment, the selecting one PUSCH from the plurality of PUSCHs according to the preset selection rule, or selecting a PUSCH with the physical layer priority same as the physical layer priority of the PUCCH from the plurality of PUSCHs, includes: in a case that the PUCCH has a high priority, selecting a PUSCH with a physical layer priority same as a physical layer priority of the PUCCH from the plurality of PUSCHs; in a case that the PUCCH has a low priority, selecting one PUSCH from the plurality of PUSCHs according to the preset selection rule, or selecting a PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting a PUSCH with the physical layer priority same as the physical layer priority of the PUCCH from the plurality of PUSCHs, the method further includes:
determining that that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on the same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the selecting the PUSCH with the physical layer priority same as the physical layer priority of the PUCCH from the plurality of PUSCHs, includes one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or the configuration signaling, the method further includes:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the selecting, from the plurality of PUSCHs, the PUSCH with the physical layer priority same as the physical layer priority of the PUCCH and not overlapping in time domain with the PUSCH with a different priority on the carrier for PUSCH transmission, includes:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs and there is a PUSCH of a first type, selecting the PUSCH of the first type, where the PUSCH of the first type is a PUSCH with a PDCCH scheduling;
in a case that there is no PUSCH with A-CSI in the plurality of PUSCHs and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in the earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

In a second aspect, embodiments of the disclosure provide a method for UCI transmission on PUSCH. The method includes: determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and receiving the UC! over the selected PUSCH.

The embodiments of the disclosure provide two methods for selecting a PUSCH to carry UCI on PUCCH. One is to select one PUSCH from the plurality of PUSCHs according to a preset selection rule, and the other is to select a PUSCH with a physical layer priority same as a physical layer priority of the PUCCH from the plurality of PUSCHs, so as to solve the problem of how to select one PUSCH from multiple PUSCHs to communicate the UCI on the PUCCH when the PUCCH overlaps with the multiple PUSCHs with different priorities in time domain resources. The embodiments are applied to a network side device. After selecting one PUSCH to communicate the UCI carried on the PUCCH through the above two methods, the UCI is received through the selected PUSCH.

In an optional embodiment, the selecting one PUSCH from the plurality of PUSCHs according to the preset selection rule, or selecting the PUSCH with the physical layer priority same as the physical layer priority of the PUCCH from the plurality of PUSCHs, includes:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the method further includes:
determining that that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on the same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the selecting the PUSCH with the physical layer priority same as the physical layer priority of the PUCCH from the plurality of PUSCHs, includes one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or the configuration signaling, the method further includes:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the selecting, from the plurality of PUSCHs, the PUSCH with the physical layer priority same as the physical layer priority of the PUCCH and not overlapping in time domain with the PUSCH with a different priority on the carrier for PUSCH transmission, includes:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs and there is a PUSCH of a first type, selecting the PUSCH of the first type, where the PUSCH of the first type is a PUSCH with a PDCCH scheduling;
in a case that there is no PUSCH with A-CSI in the plurality of PUSCHs and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in the earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

In a third aspect, embodiments of the disclosure further provide a terminal. The terminal includes a processor and a memory. The memory is configured for storing executable programs of the processor. The processor is configured for reading the programs in the memory to execute:
determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and communicating the UCI over the selected PUSCH.

In an optional embodiment, the processor is specifically configured to execute:
in a case that the PUCCH has a high priority, selecting a PUSCH with a physical layer priority same as a physical layer priority of the PUCCH from the plurality of PUSCHs;
in a case that the PUCCH has a low priority, selecting one PUSCH from the plurality of PUSCHs according to the preset selection rule, or selecting a PUSCH with a physical layer priority same as a physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting a PUSCH with a physical layer priority same as a physical layer priority of the PUCCH from the plurality of PUSCHs, the processor is further configured to execute:
determining that that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on the same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the processor is specifically configured to execute one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or the configuration signaling, the processor is specifically further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the processor is further configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs and there is a PUSCH of a first type, selecting the PUSCH of the first type, where the PUSCH of the first type is a PUSCH with a PDCCH scheduling;
in a case that there is no PUSCH with A-CSI in the plurality of PUSCHs and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in the earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

In a fourth aspect, embodiments of the disclosure further provide a network side device. The network side device includes a processor and a memory. The memory is configured for storing executable programs of the processor. The processor is configured to read the programs in the memory to execute:
determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and receiving the UC! over the selected PUSCH.

In an optional embodiment, the processor is specifically configured to execute:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the processor is specifically configured to execute:
determining that that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on the same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the processor is specifically configured to execute one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or the configuration signaling, the processor is specifically further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the processor is further configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs and there is a PUSCH of a first type, selecting the PUSCH of the first type, where the PUSCH of the first type is a PUSCH with a PDCCH scheduling;
in a case that there is no PUSCH with A-CSI in the plurality of PUSCHs and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in the earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

In a fifth aspect, embodiments of the disclosure further provide a computer storage medium storing computer programs, and the computer programs are executed by a processor to perform the operations of the method in the first aspect or the second aspect.

These and other aspects of the disclosure will be more clearly understood in the following description of the embodiments.

### Brief Description of Figures

In order to illustrate the technical solutions in the embodiments of the disclosure more clearly, the following briefly introduces the accompanying drawings used in the description of the embodiments. Obviously, the accompanying drawings in the following description are only part of embodiments of the disclosure. For those of ordinary skill in the art, other drawings may also be obtained from these drawings without any creative effort.
Fig. 1 is a flowchart of an implementation of a method for UCI transmission on PUSCH provided by an embodiment of the disclosure.
Fig. 2 is a schematic diagram of an implementation of selecting a PUSCH to carry UCI according to an embodiment of the disclosure.
Fig. 3 is a schematic diagram of an implementation of selecting a PUSCH to carry UCI according to an embodiment of the disclosure.
Fig. 4 is a schematic diagram of an implementation of selecting a PUSCH to carry UCI according to an embodiment of the disclosure.
Fig. 5 is a schematic diagram of an implementation of selecting a PUSCH to carry UCI according to an embodiment of the disclosure.
Fig. 6 is a schematic diagram of an implementation of selecting a PUSCH to carry UCI according to an embodiment of the disclosure.
Fig. 7 is a flowchart of an implementation of a method for UCI transmission on PUSCH according to an embodiment of the disclosure.
Fig. 8 is a schematic diagram of an implementation of selecting a PUSCH to carry UCI according to an embodiment of the disclosure.
Fig. 9 is a schematic diagram of an implementation of selecting a PUSCH to carry UCI according to an embodiment of the disclosure.
Fig. 10 is a schematic diagram of an implementation of selecting a PUSCH to carry UCI according to an embodiment of the disclosure.
Fig. 11 is a schematic diagram of an implementation of selecting a PUSCH to carry UCI according to an embodiment of the disclosure.
Fig. 12 is a schematic diagram of an implementation of selecting a PUSCH to carry UCI according to an embodiment of the disclosure.
Fig. 13 is a schematic diagram of a system for UCI transmission on PUSCH according to an embodiment of the disclosure.
Fig. 14 is a schematic diagram of a terminal according to an embodiment of the disclosure.
Fig. 15 is a schematic diagram of a network side device according to an embodiment of the disclosure.
Fig. 16 is a schematic diagram of an apparatus for UCI transmission on PUSCH according to an embodiment of the disclosure.
Fig. 17 is a schematic diagram of an apparatus for UCI transmission on PUSCH according to an embodiment of the disclosure.

### Detailed Description

In order to make the purpose, technical solutions and advantages of the disclosure clearer, the disclosure will be further described in detail below with reference to the accompanying drawings. Obviously, the described embodiments are only a part of the embodiments of the disclosure, not all of the embodiments. Based on the embodiments in the disclosure, all other embodiments obtained by those of ordinary skill in the art without creative efforts shall fall within the scope of the disclosure.

In the 5G NR, uplink channel transmissions with different physical layer priorities are supported. There may be resource conflicts between uplink channels with different physical layer priorities for the same terminal, such as the overlap between symbols occupied by uplink channels with different priorities on the same carrier. In the Rel-16 version, it is specified that only the channel with high physical layer priority among the conflicted channels is transmitted and the channel with low physical layer priority is dropped. In the Rel-17 version, in order to avoid dropping the UCI on the channel with low priority, multiplexed transmission of uplink channels with different physical layer priorities may be supported, that is, information with different priorities is transmitted simultaneously on the same uplink channel, however, there is no specific multiplexing transmission method at present.
1) The channel transmissions with different physical layer priorities in the related art involved in the embodiments will be described as following.

A terminal can support different types of services, such as enhanced mobile broadband (eMBB) service and ultra-reliable and low latency communication (URLLC) service, etc. Different types of services have different requirements for reliability and transmission delay. The URLLC service flow may occur sporadically and irregularly. If different system resources are independently reserved for different services, the overhead of system resources is relatively large. In many cases, the resources reserved for the URLLC service may not be used. In order to improve the utilization rate of system resources, multiplexing transmissions of different services on the same resources may be supported. It may occur that an earlier scheduled data transmission is interrupted or cancelled by another later scheduled data transmission. For example, after a terminal is scheduled to communicate the eMBB service on resource 1, when the URLLC service arrives, scheduling should be performed as soon as possible in order to meet the delay requirement of the URLLC service, all or part of the resource 1 (including time domain resources and/or frequency domain resources) allocated to the eMBB service may be occupied by URLLC transmission. For example, all or part of the symbols in time domain resources (a set of symbols) scheduled for eMBB transmission on the same carrier may be scheduled for URLLC transmission. Regardless of whether the frequency domain resources overlap, since two uplink channels cannot be communicated on the same carrier at the same time, the eMBB service transmission will be interrupted or canceled due to the URLLC service.

In order to avoid mutual influence between services, different services are provided with different priorities, so that when a resource conflict occurs, a channel with a high priority is selected for transmission, and a channel with a low priority is dropped. Therefore, in order to better support the transmissions of different services with different requirements, a physical layer priority is introduced in the Rel-16. In the Rel-16, it is specified that when channels with different physical layer priorities collide, for example, multiple PUCCHs on the same carrier overlap with each other in time domain, or PUCCH and physical uplink control channel (PUSCH) on the same carrier overlap with each other in time domain, the channel with the low priority is dropped, and only the channel with the high priority is communicated.

The physical layer priorities of PUCCH and PUSCH can be obtained by default, dynamic indication via downlink control information (DCI), or semi-static configuration via radio resource control (RRC). For example, when PUCCH carries a scheduling request (SR), the priority of PUCCH is determined based on the priority corresponding to the SR carried by PUCCH, and the priority corresponding to each SR is configured by higher-layer signaling. When PUCCH carries hybrid automatic repeat request-ACKnowledgment (HARQ-ACK) for SPS PDSCH, or carries HARQ-ACK of physical downlink control channel (PDCCH) indicating SPS PDSCH release, the priority of PUCCH is determined by the HARQ-ACK codebook index configured for SPS PDSCH by higher-layer signaling. An HARQ-ACK codebook with index 0 has a low priority, and an HARQ-ACK codebook with index 1 has a high priority. When PUCCH carries channel state information (CSI) (including periodic CSI and semi-persistent CSI (SP-CSI)), the priority of PUCCH has a low priority by default. When DCI includes a priority indication field, the priority may be obtained via the priority indication field included in DCI corresponding to PUCCH or PUSCH (or PDCCH, where PDCCH can be considered to be equivalent to DCI in the disclosure, and DCI is a format for PDCCH transmission, i.e., a corresponding DCI is equivalent to a corresponding PDCCH). For example, when DCI used by PDCCH contains a priority indication field, then: when PDCCH schedules one PDSCH, the priority indication field indicates the priority of PUCCH for carrying HARQ-ACK of PDSCH; when PDCCH schedules one PUSCH, the priority indication field indicates the priority of the scheduled PUSCH, where the PUSCH includes PUSCH with only transport block (TB), or PUSCH with only aperiodic CSI (A-CSI), or PUSCH with both TB and A-CSI; for PUSCH with SP-CSI, the priority of PUSCH with SP-CSI can be obtained by the priority indication field in the DCI which activates the PUSCH with SP-CSI. When DCI does not include a priority indication field, or higher-layer signaling does not have a priority configuration, a low priority is determined by default.

2) UCI transmission in the 5G NR in the related art involved in the embodiments is described below.

UCI includes HARQ-ACK, channel state information (CSI), SR, etc. UC! is communicated on PUCCH. Here, HARQ-ACK is a general term for acknowledgment (ACK) and non-acknowledgment (NACK), and is configured to provide feedback to a base station that whether PDSCH or PDCCH indicating SPS PDSCH release is received correctly, for PDSCH or PDCCH indicating SPS PDSCH release. CSI is configured for feedback of downlink channel quality, thereby helping the base station to better perform downlink scheduling, such as the selection of modulation and coding scheme (MCS) based on CSI, the appropriate configuration of resource block (RB), etc. SR is configured, when an uplink service of the terminal need to be communicated, to request the base station for PUSCH transmission resource for carrying the uplink service.

3) The overlapping of time domain resources between PUCCH and PUCCH/PUSCH with the same priority in the related art involved in the embodiments is described below.

In NR Rel-15 and Rel-16, parallel transmission of PUCCH and PUSCH at the same time, no matter on the same carrier or on different carriers, is not supported. When PUCCH and PUSCH (without special explanation, PUCCH and PUSCH refer to PUCCH and PUSCH that do not use repeated transmission) overlap in time domain resources, when the preset time condition (timeline) is satisfied, the UCI (generally including HARQ-ACK and CSI) is transferred from PUCCH to PUSCH for transmission. If there is an SR (positive SR), the SR is dropped rather than being communicated on PUSCH. When there are multiple PUSCHs that overlap with PUCCH, one PUSCH is selected according to a preset rule, and the PUSCH with A-CSI is preferentially selected. When there are PUSCH with a PDCCH scheduling (DG PUSCH) and PUSCH without a PDCCH scheduling (CG PUSCH, SP-CSI PUSCH, etc.), DG PUSCH is preferentially selected. After selecting according to the above rule, when there are PUSCHs on multiple carriers, the PUSCH on the carrier with a low carrier index is preferentially selected. When multiple PUSCHs without overlapping in time domain on the selected carrier overlap with PUCCH, the earliest PUSCH is selected.

It should be noted that the above timeline is defined as: if PUCCH or PUSCH has a corresponding PDCCH, for example, HARQ-ACK carried on PUCCH is HARQ-ACK of PDSCH with PDCCH scheduling or HARQ-ACK of PDCCH indicating downlink SPS resource release, then the PDCCH that schedules PDSCH or the PDCCH that indicates downlink SPS resource release is PDCCH corresponding to the PUCCH, or is called PDCCH that schedules the PUCCH, and the PDCCH that schedules the PUSCH is the PDCCH corresponding to the PUSCH. The first symbol of the channel with the earliest start time in the overlapped PUCCH and PUSCH is used as a target symbol. If there are multiple channels with the same start time, a channel is selected randomly, and the first symbol of the selected channel is used as a target symbol. The target symbol needs to meet the following timeline for multiplexing transmission, otherwise it is considered to be wrong scheduling.

Timeline1: the target symbol is not earlier than a first symbol (including cyclic prefix (CP) after the T1mux time from the last symbol of any PDSCH or SPS PDSCH release that requires HARQ-ACK feedback on PUCCH.

That is, the time interval between the target symbol and the last symbol of any of the above PDSCH or SPS PDSCH release is not less than the T1mux time. Here, T1mux is related to the processing delay of PDSCH, and can be calculated according to a predetermined formula and related parameters. The purpose of this timeline is to ensure that the acquisition and preparation of the HARQ-ACK can be completed before starting the transmission of the finally determined channel for HARQ-ACK transmission.

Timeline2: the target symbol is not earlier than a first symbol (including CP) after the T2mux time from the last symbol of any PDCCH (including PDCCH indicating SPS PDSCH release) scheduling PDSCH (if present) and PUSCH (if present).

That is, the time interval between the target symbol and the last symbol of any one of the above PDCCHs is not less than the T2mux time. T2mux is related to the processing delay of PUSCH, and can be calculated according to a predetermined formula and related parameters. The purpose of the timeline2 is to ensure that when the UCI needs to be transferred to the PUSCH for transmission, the PDCCH that schedules the PUSCH can be obtained before the PUCCH preparation starts, so that there is no need to prepare UCI transmission on the PUCCH, and the preparation for transmission including the UCI transmission can be completed before PUSCH transmission, i.e., the acquisition and multiplexing of UCI is completed, and the preparation of TB (such as encoding, modulation, scrambling, etc.) is completed. When the multiplexing is between multiple PUCCHs, the T2mux can also be used to simulate preparation time for multiplexing of CSI and SR as well as HARQ-ACK.

If there is no PDCCH corresponding to HARQ-ACK carried on PUCCH (that is, the HARQ-ACK is HARQ-ACK of SPS PDSCH), there is no PDCCH scheduling PDSCH in this case. If there is neither PUSCH nor PDCCH corresponding to PUSCH, it is only necessary to check T1mux rather T2mux. If CSI and/or SR are carried on PUCCH, since there is no corresponding PDSCH, there is no need to check T1mux, and if there is no PUSCH or the PUSCH does not have a corresponding PDCCH, then there is no need to check T2mux either.

If a PUCCH overlaps with a PUCCH, at least one PUCCH is communicated with repetition (that is, occupying multiple slots and repeatedly communicating UCI in each slot), then only for a repetition with overlapping, the channel with the high priority is communicated and the channel with the low priority is dropped, which does not affect the repetitions without overlapping. If a PUCCH overlaps with the PUSCH with repetition transmission based on slots (repetition transmission in Rel-15, or repetition type A in Rel-16), UCI carried on PUCCH is transferred to one or more PUSCH slots that overlap with the PUCCH for transmission; when repetition type B in Rel-16 is used for the PUSCH, UCI carried by PUCCH is transferred to the earliest actual repetition PUSCH containing more than one symbol that overlaps with PUCCH for transmission (the actual repetition PUSCH is a repetition PUSCH obtained after segmentation based on unavailable symbols, DL symbols, slot boundaries, etc.). The one or more repetition PUSCHs that overlap with PUCCH need to satisfy the multiplexing timeline. If multi-slot PUCCH overlap with single-slot or multi-slot PUSCH, the PUSCH overlapping with the PUCCH is dropped, to ensure that the repetition transmission of the PUCCH is not interrupted.

When uplink channels with different physical layer priorities overlap in time domain and multiplexing transmission of uplink channels with different priorities is supported, multiple PUSCHs with different priorities may overlap in time domain with one PUCCH at the same time. For example, when PUCCH overlaps with multiple PUSCHs, UCI on the PUCCH is transferred to the PUSCH that overlaps with the PUCCH for transmission, so that the PUCCH is not communicated. In this case, there is no clear method for how to select one PUSCH from the multiple PUSCHs to carry the UCI on the PUCCH.

In order to solve the above technical problem, embodiments of the disclosure provide a method for UCI transmission on the PUSCH, which may be applied to a terminal or a network side device.

The technical solutions provided by the embodiments of the disclosure may be applicable to various systems, especially 5G systems. For example, the applicable systems may be a global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include a terminal device and network device. The system may also include a core network part, such as an evolved packet system (EPS), a 5G system (5GS), and the like.

The terminal device involved in the embodiments of the disclosure may be a device that provides voice and/or data connectivity to a user, a handheld device with a wireless connection function, or other processing device connected with a wireless modem. In different systems, the names of the terminal device may be different. For example, in the 5G system, the terminal device may be called user equipment (UE). The wireless terminal device can communicate with one or more core networks (CNs) via a radio access network (RAN). The wireless terminal device may be a mobile terminal device, such as a mobile phone (or cellular phone) and a computers with mobile terminal device, e.g., portable, pocket-sized, hand-held, computer-built or vehicle-mounted mobile devices, which exchange language and/or data with the radio access network, For example, the wireless terminal device may be a personal communication service (PCS) phone, cordless phone, session initiated protocol (SIP) phone, wireless local loop (WLL) station, personal digital assistant (PDA) and other devices. The wireless terminal device may also be referred to as a system, subscriber unit, subscriber station, mobile workstation, mobile station, remote station, access point, remote terminal, access terminal, user terminal, user agent, and user device, which are not limited in the embodiments of the disclosure.

The network side device involved in the embodiments of the disclosure may be a base station. The base station may include a plurality of cells that provide services for the terminal. Depending on the specific applications, the base station may also be called an access point, or may be a device in the access network that communicates with wireless terminal devices through one or more sectors on the air interface, or other names. The network side device can exchange received air frames with internet protocol (IP) packets, and act as a router between the wireless terminal device and the rest of the access network, where the rest of the access network can include IP communication network. The network side device can also coordinate the attribute management of the air interface. For example, the network side device involved in the embodiments of the disclosure may be a base transceiver station (BTS) in a global system for mobile communications (GSM) or a code division multiple access (CDMA)., BTS), NodeB in wide-band code division multiple access (WCDMA), evolutional Node B, eNB or e-NodeB in an LTE system, 5G base station (gNB) in the 5G network architecture (next generation system), home evolved Node B (HeNB), relay node, family base station (femto), micro base station (pico), etc., which are not limited in the embodiments of the disclosure. In some network structures, the network side device may include a centralized unit (CU) node and a distributed unit (DU) node, and the centralized unit and the distributed unit may also be geographically separated.

One or more antennas can be used between the network side device and the terminal device to perform multiple input multiple output (MIMO) transmission, and the MIMO transmission can be single user MIMO (SU-MIMO) or multiple user MIMO (MU-MIMO). According to the form and number of antenna combinations, the MIMO transmission can be 2D-MIMO, 3D-MIMO, FD-MIMO, or massive-MIMO, or diversity transmission, precoding transmission, or beamforming transmission.

In the embodiments of the disclosure, the term "and/or" describes the association relationship of associated objects, and indicates that there can be three kinds of relationships. For example, A and/or B can indicate that A exists alone, A and B exist at the same time, and B exists alone. The character "/" generally indicates that the associated objects are an "or" relationship.

In the embodiments of the disclosure, the term "plurality of" or "multiple" refers to two or more than two, and other quantifiers are similar.

The application scenarios described in the embodiments of the disclosure are for illustrating the technical solutions of the embodiments of the disclosure more clearly, and do not limit the technical solutions provided by the embodiments of the disclosure. It appears that the technical solutions provided by the embodiments of the disclosure are also applicable to similar technical problems.

The technical solutions in the embodiments of the disclosure will be clearly and completely described below with reference to the accompanying drawings in the embodiments of the disclosure. Obviously, the described embodiments are only a part of the embodiments, not all of the embodiments of the disclosure. Based on the embodiments in the disclosure, all other embodiments obtained by those of ordinary skill in the art without creative efforts shall fall within the scope of the disclosure.

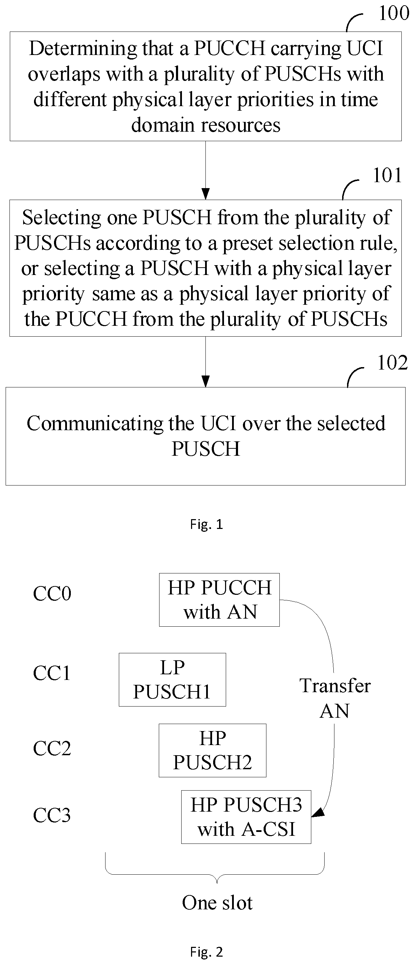

In a first embodiment, a method for UCI transmission on PUSCH is provided, which can be applied to a terminal. As shown in Fig. 1, the specific implementation of the method is as follows.

S100: determining that a PUCCH carrying UCI overlaps with a plurality of PUSCHs with different physical layer priorities in time domain resources.

S101: selecting one PUSCH from the plurality of PUSCHs according to a preset selection rule, or selecting a PUSCH with a physical layer priority same as a physical layer priority of the PUCCH from the plurality of PUSCHs.

S102: communicating the UCI over the selected PUSCH.

The embodiments of the disclosure solve the problem of how to select one PUCCH from the plurality of PUSCHs with different physical layer priorities to communicate UCI carried on PUCCH when the plurality of PUSCHs overlap with the PUCCH in time domain resources and the plurality of PUSCHs include PUSCHs with different physical layer priorities. It should be noted that the precondition of the method provided in the embodiments is that when the plurality of PUSCHs overlap with the PUCCH in time domain resources, and the plurality of PUSCHs include PUSCHs with different physical layer priorities, there is no method in current condition for how to select one PUSCH from the plurality of PUSCHs with different physical layer priorities to communicate the UCI carried on the PUCCH.

The embodiments of the disclosure provide the following two ways for selecting a PUSCH.

Way 1: selecting one PUSCH from the plurality of PUSCHs according to a preset selection rule.

In the embodiments, the physical layer priorities of the plurality of PUSCHs are not distinguished, and the PUSCH is selected from the plurality of PUSCHs overlapping with the PUCCH in time domain resources according to a preset selection rule.

Way 2: selecting a PUSCH with a physical layer priority same as a physical layer priority of the PUCCH from the plurality of PUSCHs.

In an optional embodiment, the physical layer priorities of the PUCCHs include a high priority and a low priority.

In a case that the physical layer priority of the PUCCH is the high priority, the above way 2 is used to select the PUSCH to communicate the UCI carried on the PUCCH, that is, the PUSCH with a physical layer priority same as the physical layer priority of the PUCCH is selected from the plurality of PUSCHs.

In a case that the physical layer priority of the PUCCH is the high priority, the above way 1 is used to select the PUSCH to communicate the UCI carried on the PUCCH.

In a case that the physical layer priority of the PUCCH is the low priority, the above way 1 or way 2 is used to select the PUSCH to communicate the UCI carried on the PUCCH. During implementation, the PUSCH is selected from the plurality of PUSCHs according to the preset selection rule, or the PUSCH with the physical layer priority same as the physical layer priority of the PUCCH is selected from the plurality of PUSCHs.

Here, the high priority is determined according to a service type and is greater than a priority threshold, or is directly defined according to a service type. The low priority is determined according to a service type and is not greater than a priority threshold, or is directly defined according to a service type. Alternatively, the priority is determined according to a configuration signaling, where the configuration signaling may be a higher-layer signaling or an indication field in the PDCCH for scheduling PUCCH and PUSCH transmission. There are two priorities, i.e., a low priority and a high priority; or there may be more priorities.

In an optional embodiment, the PUCCH carrying the UCI is one of a plurality of time division multiplexing (TDM) PUCCHs.

It should be noted that, in a case that there are a plurality ofTDM PUCCHs, one PUSCH may be selected for each PUCCH according to the above way 1 or way 2 to communicate the UCI carried on the PUCCH.

In an optional embodiment, the following unexpected cases are provided.

Case 1: it is not expected that a same PUSCH is selected for UCI transmission for multiple PUCCHs with different priorities.

The unexpected case in the embodiments is used to indicate a situation that is to be avoided for the scheduling or configuration of the base station. If the situation occurs, it can be considered as erroneous scheduling or configuration, and the operations of the terminal are not specified.

In the embodiments, before selecting one PUSCH from the plurality of PUSCHs, it is determined that there is no case where a same PUSCH is selected for UCI transmission for multiple PUCCHs with different priorities.

Case 2: it is not expected that a same PUSCH is selected for HARQ-ACK transmission for multiple PUCCHs carrying HARQ-ACK with different priorities.

In the embodiments, before selecting one PUSCH from the plurality of PUSCHs, it is determined that there is no case where a same PUSCH is selected for HARQ-ACK transmission for multiple PUCCHs carrying HARQ-ACK with different priorities.

Case 3: it is only supported that at most two HARQ-ACK sequences with different priorities are communicated over one PUSCH. Here, the HARQ-ACK sequences with different priorities include an HARQ-ACK sequence with a high priority and an HARQ-ACK sequence with a low priority.

In the embodiments, before selecting one PUSCH from the plurality of PUSCHs, it is determined that there are at most two HARQ-ACK sequences with different priorities which are communicated over one PUSCH.

Case 4: it is not expected that a same PUSCH is selected for UCI transmission for multiple PUCCHs with the same priority.

In the embodiments, before selecting one PUSCH from the plurality of PUSCHs, it is determined that there is no case where a same PUSCH is selected for UCI transmission for multiple PUCCHs with the same priority.

Case 5: it is not expected that a same PUSCH is selected for HARQ-ACK transmission for multiple PUCCHs carrying HARQ-ACK with the same priority.

In the embodiments, it is determined that there is no case where a same PUSCH is selected for HARQ-ACK transmission for multiple PUCCHs carrying HARQ-ACK with the same priority.

In an optional embodiment, for the way 2, the selection of the PUSCH with the physical layer priority same as the physical layer priority of the PUCCH from the plurality of PUSCHs includes one of the following schemes.

Scheme 1: if a plurality of PUSCHs have the priority same as the priority of the PUCCH, selecting one PUSCH from the plurality of PUSCHs with the priority same as the priority of the PUCCH according to the preset selection rule.

Scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling.

In the embodiments, if there is no PUSCH with a priority same as the priority of the PUCCH, and it is determined according to the appointed rule or configuration signaling that the UCI on the PUCCH is allowed to be communicated on a PUSCH with a priority different from priority of the PUCCH, one PUSCH is selected from the PUSCHs with priorities different from the priority of the PUCCH according to the preset selection rule; and/or, if there is no PUSCH with a priority same as the priority of the PUCCH, and it is determined according to the appointed rule or configuration signaling that the UCI on the PUCCH is not allowed to be communicated on a PUSCH with a priority different from the priority of the PUCCH, the PUCCH is dropped or the multiple PUSCHs are dropped.

Scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

During implementation, for example, when a PUCCH with the low priority overlaps with a plurality of PUSCHs, a PUSCH with a low priority is preferentially selected for transmission of the UCI on the PUCCH with the low priority, where the PUSCH with the low priority does not overlap with a PUSCH with the high priority on the carrier on which the PUSCH with the low priority is located (i.e., it will not be cancelled by the transmission of PUSCH with the high priority).

In an optional embodiment, the preset selection rule includes any one or more of the following.

Rule 1: in a case that there is a PUSCH with A-CSI in the plurality of PUSCHs, selecting the PUSCH with A-CSI.

Rule 2: in a case that there is no PUSCH with A-CSI in the plurality of PUSCHs and there is a PUSCH of a first type, selecting the PUSCH of the first type, where the PUSCH of the first type is a PUSCH with a PDCCH scheduling.

Rule 3: in a case that there is no PUSCH with A-CSI in the plurality of PUSCHs and there is only a PUSCH of a second type, selecting the PUSCH of the second type, where the PUSCH of the second type is a PUSCH without a PDCCH scheduling.

Rule 4: while selecting the PUSCH of the first type, in a case that there are a plurality of PUSCHs of the first type communicated over a plurality of carriers, or while selecting the PUSCH of the second type, in a case that there are a plurality of PUSCHs of the second type communicated over a plurality of carriers, selecting a PUSCH on a carrier based on a carrier index.

Optionally, the PUSCH on a carrier with the smallest carrier index is selected.

Rule 5: in a case that there are a plurality of PUSCHs communicated on a plurality of carriers and having different SCSs, selecting a PUSCH in the earliest one of slots where the plurality of PUSCHs communicated on the plurality of carriers are located.

Rule 6: while selecting the PUSCH on the carrier according to the carrier index, in a case that there are multiple PUSCHs that do not overlap with each other in time domain on the selected carrier, selecting a PUSCH with the earliest start symbol from the multiple PUSCHs.

During implementation, the preset selection rule includes: for the PUSCHs that overlap with the PUCCH in time domain, if there is a PUSCH with A-CSI, this PUSCH with A-CSI is preferentially selected; otherwise (that is, there is no PUSCH with A-CSI), if there is both PUSCH with DCI scheduling and PUSCH without corresponding DCI (such as CG PUSCH, SP-CSI PUSCH, etc.), the PUSCH with DCI scheduling is preferentially selected; if there is only one type of PUSCH (PUSCH with DCI scheduling, or PUSCH without corresponding DCI) and there are multiple PUSCHs on multiple carriers overlapping with the PUCCH, the PUSCH on the carrier with the smallest carrier index is preferentially selected; if multiple TDM PUSCHs overlap with the PUCCH on a selected carrier, the PUSCH with the earliest start symbol is preferentially selected.

If the PUSCHs on multiple carriers have different SCSs, after determining that there is no PUSCH with A-CSI, if there are multiple PUSCHs with different physical layer priorities in the earliest slot among the slots where the PUSCHs on multiple carriers are located, the selection is made according to the rules in the embodiments.

Based on the overlapping of time domain resources between PUCCH and PUSCHs as shown in Fig. 2, embodiments of the disclosure provide an embodiment of selecting a PUSCH to carry UCI. LP represents a low priority, HP represents a high priority, AN is the abbreviation of HARQ-ACK, and different PUSCHs are on different carriers. One PUSCH may be on the same carrier as the PUCCH, or all the PUSCHs may be on different carriers than the PUCCH. The specific selection methods are as follows.
1) PUSCH is selected according to the rule 1.
   During implementation, HP PUSCH3 with A-CSI is selected from a plurality of PUSCHs overlapping with PUCCH in time domain resources to communicate UCI on the PUCCH, and the PUCCH will not be communicated.
2) PUSCH is selected according to the rule 2.

During implementation, the PUSCHs with the same priority as the PUCCH are determined from the PUSCH1 to PUSCH3 overlapping with the PUCCH in time domain resources, namely PUSCH2 and PUSCH3 are determined, the HP PUSCH3 with A-CSI is selected from the PUSCH2 and PUSCH3 to communicate UCI on the PUCCH, and the PUCCH will not be communicated.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

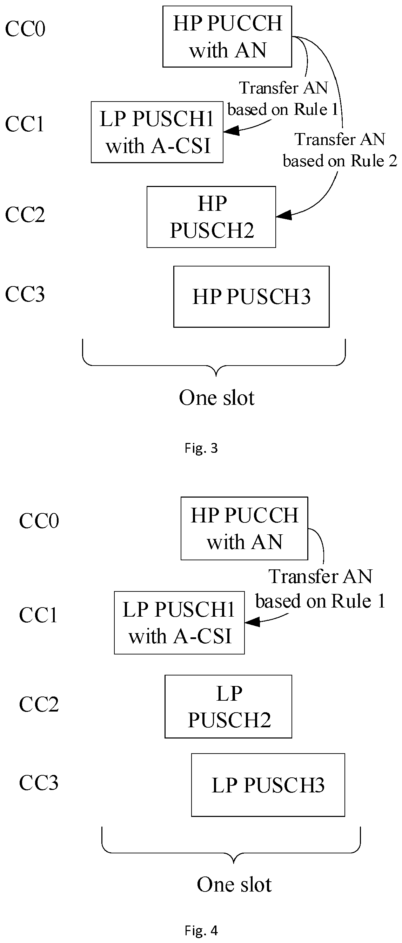

Based on the overlapping of time domain resources between PUCCH and PUSCHs as shown in Fig. 3, embodiments of the disclosure provide an embodiment of selecting a PUSCH to carry UCI. LP represents a low priority, HP represents a high priority, AN is the abbreviation of HARQ-ACK, different PUSCHs are on different carriers, one PUSCH may be on the same carrier as the PUCCH, or all the PUSCHs may be on different carriers than the PUCCH. The specific selection methods are as follows.
1) PUSCH is selected according to the rule 1.
   The LP PUSCH1 with A-CSI is selected from the plurality of PUSCHs overlapping with the PUCCH in time domain resources to communicate UCI of PUCCH, and the PUCCH will not be communicated.
2) PUSCH is selected according to the rule 2.

The PUSCHs with the same priority as the PUCCH are determined from PUSCH1 to PUSCH3 overlapping with the PUCCH in time domain resources, namely PUSCH2 and PUSCH3 are determined. If there is no PUSCH with A-CSI in PUSCH2 and PUSCH3, and PUSCHs on CC2 and CC3 are of the same type (for example, both are PUSCHs with corresponding DCI, or both are PUSCHs without corresponding DCI), HP PUSCH2 on CC2 is selected for UCI transmission according to the CC index.

In a case that there is no PUSCH with A-CSI in PUSCH2 and PUSCH3, and the PUSCHs on CC2 and CC3 are of different types, for example, the PUSCH on CC3 is a PUSCH with corresponding DCI and the PUSCH on CC2 is a PUSCH without corresponding DCI, the HP PUSCH3 on CC3 is selected for UCI transmission.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

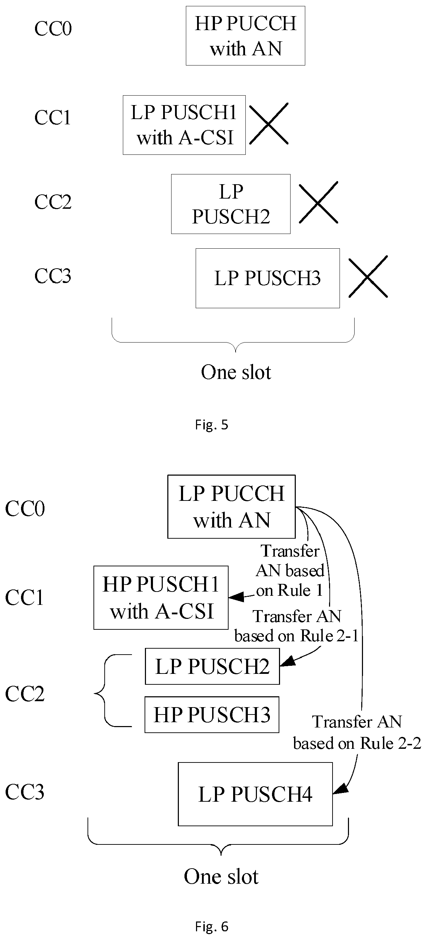

Based on the overlapping of time domain resources between PUCCH and PUSCHs as shown in Fig. 4 and Fig. 5, embodiments of the disclosure provide an embodiment of selecting a PUSCH to carry UCI. LP represents a low priority, HP represents a high priority, and AN is the abbreviation of HARQ-ACK. Different PUSCHs are on different carriers, and one PUSCH may be on the same carrier as the PUCCH, or all the PUSCHs may be on different carriers than the PUCCH. The specific selection methods are as follows.
1) PUSCH is selected according to the rule 1.
   As shown in Fig. 4, the LP PUSCH1 with A-CSI is selected from the plurality of PUSCHs overlapping with the PUCCH in time domain resources to communicate UC! of PUCCH, and the PUCCH will not be communicated.
2) PUSCH is selected according to the rule 2.

It is determined that there is no PUSCH with the same priority as the PUCCH in the PUSCH1 to PUSCH3 overlapping with the PUCCH in time domain resources, and according to the appointed rule or configuration signaling, the UCI on the PUCCH is supported to be transferred to the PUSCH with a priority different from that of the PUCCH for transmission, the LP PUSCH1 with A-CSI is selected from the PUSCH1 to PUSCH3 to communicate the UCI on the PUCCH, and the PUCCH will not be communicated, as shown in Fig. 4.

In a case that there is no PUSCH with the same priority as the PUCCH and according to the appointed rule or configuration signaling, the UCI on the PUCCH is not supported to be transferred to the PUSCH with a priority different from that of the PUCCH for transmission, only the HP PUCCH with AN is communicated, and all the LP PUSCHs that overlap with the PUCCH are dropped, as shown in Fig. 5.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

Based on the overlapping between PUCCH and PUSCHs as shown in Fig. 6, LP represents a low priority, HP represents a high priority, and AN is the abbreviation of HARQ-ACK. One PUSCH is on the same carrier as the PUCCH, or all the PUSCHs are on different carriers than the PUCCH. The PUSCH is selected for UCI transmission according to the embodiments of the disclosure. The specific selection methods are as follows.
1) PUSCH is selected according to the rule 1.
   The HP PUSCH with A-CSI on CC1 is selected to carry the LP UCI without distinguishing priorities.
2) PUSCH is selected according to the rule 2.

In a first case (rule 2-1), only the priorities are distinguished, and the PUSCH is selected from LP PUSCHs according to the preset selection rule in the related art, then according to the CC index, the LP PUSCH on CC2 is selected to communicate the LP UCI.

In a second case (rule 2-2), the LP PUSCH that will not be cancelled due to the HP PUSCH is further selected from the LP PUSCHs in the case of prioritization, that is, the PUSCH with no HP PUSCH overlapping with it on the same carrier is selected. In this case, the LP PUSCH on CC3 is selected to communicate the LP UCI.

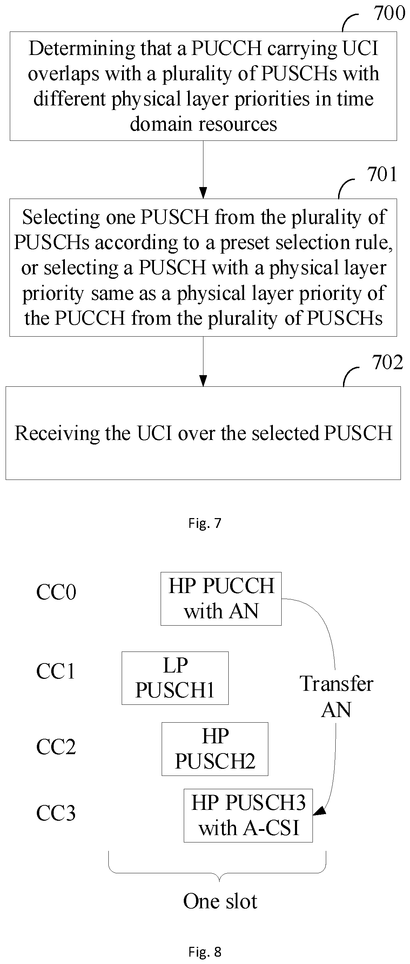

In a second embodiment, based on the same inventive concept, embodiments of the disclosure further provide a method for UCI transmission on PUSCH, which can be applied to a network side device. As shown in Fig. 7, the specific implementation of the method is as follows.

S700: determining that a PUCCH carrying UCI overlaps with a plurality of PUSCHs with different physical layer priorities in time domain resources.

S701: selecting one PUSCH from the plurality of PUSCHs according to a preset selection rule, or selecting a PUSCH with a physical layer priority same as a physical layer priority of the PUCCH from the plurality of PUSCHs.

S702: receiving the UC! over the selected PUSCH.

The embodiments of the disclosure solve the problem of how to select one PUCCH from the plurality of PUSCHs with different priorities to communicate UCI carried on PUCCH when the plurality of PUSCHs overlap with the PUCCH in time domain resources and the plurality of PUSCHs include PUSCHs with different physical layer priorities. It should be noted that the precondition of the method provided in the embodiments is that when the plurality of PUSCHs overlap with the PUCCH in time domain resources, and the plurality of PUSCHs include PUSCHs with different physical layer priorities, there is no method in current condition for how to select one PUSCH from the plurality of PUSCHs with different physical layer priorities to receive the UCI carried on the PUCCH.

The embodiments of the disclosure provide the following two ways for selecting PUSCH.

Way 1: selecting one PUSCH from the plurality of PUSCHs according to a preset selection rule.

In the embodiments, the physical layer priorities of the plurality of PUSCHs are not distinguished, and the PUSCH is selected from the plurality of PUSCHs according to a preset selection rule.

Rule 2: selecting a PUSCH with a physical layer priority same as a physical layer priority of the PUCCH from the plurality of PUSCHs.

In an optional embodiment, the physical layer priorities of the PUCCHs include a high priority and a low priority.

In a case that the physical layer priority of the PUCCH is the high priority, the above way 2 is used to select the PUSCH to communicate the UCI carried on the PUCCH, that is, the PUSCH with the physical layer priority same as the physical layer priority of the PUCCH is selected from the plurality of PUSCHs.

In a case that the physical layer priority of the PUCCH is the high priority, the above way 1 is used to select the PUSCH to communicate the UCI carried on the PUCCH.

In a case that the physical layer priority of the PUCCH is the low priority, the above way 1 or way 2 is used to select the PUSCH to communicate the UCI carried on the PUCCH. During implementation, the PUSCH is selected from the plurality of PUSCHs according to a preset selection rule, or the PUSCH with the physical layer priority same as the physical layer priority of the PUCCH is selected from the plurality of PUSCHs.

Here, the high priority is determined according to a service type and is greater than a priority threshold, and the low priority is determined according to a service type and is not greater than a priority threshold. Alternatively, the priority is determined according to a configuration signaling, where the configuration signaling may be a higher-layer signaling or an indication field in the PDCCH for scheduling PUCCH and PUSCH transmission. There are two priorities, i.e., a low priority and a high priority; or there may be more priorities.

In an optional embodiment, the PUCCH carrying the UCI is one of a plurality of time division multiplexing (TDM) PUCCHs.

It should be noted that, in a case that there are a plurality ofTDM PUCCHs, one PUSCH may be selected for each PUCCH according to the above way 1 or way 2 to communicate the UCI carried on the PUCCH.

In an optional embodiment, the following unexpected cases are provided.

Case 1: it is not expected that a same PUSCH is selected for UCI transmission for multiple PUCCHs with different priorities.

The unexpected case in the embodiments is used to indicate a situation that is to be avoided for the scheduling or configuration of the base station. If the situation occurs, it can be considered as erroneous scheduling or configuration, and the operations of the terminal are not specified.

In the embodiments, before selecting one PUSCH from the plurality of PUSCHs, it is determined that there is no case where a same PUSCH is selected for UCI transmission for multiple PUCCHs with different priorities.

Case 2: it is not expected that a same PUSCH is selected for HARQ-ACK transmission for multiple PUCCHs carrying HARQ-ACK with different priorities.

In the embodiments, before selecting one PUSCH from the plurality of PUSCHs, it is determined that there is no case where a same PUSCH is selected for HARQ-ACK transmission for multiple PUCCHs carrying HARQ-ACK with different priorities.

Case 3: it is only supported that at most two HARQ-ACK sequences with different priorities are communicated over one PUSCH. Here, the HARQ-ACK sequences with different priorities include an HARQ-ACK sequence with a high priority and an HARQ-ACK sequence with a low priority.

In the embodiments, before selecting one PUSCH from the plurality of PUSCHs, it is determined that there are at most two HARQ-ACK sequences with different priorities which are communicated over one PUSCH.

Case 4: it is not expected that a same PUSCH is selected for UCI transmission for multiple PUCCHs with the same priority.

In the embodiments, before selecting one PUSCH from the plurality of PUSCHs, it is determined that there is no case where a same PUSCH is selected for UCI transmission for multiple PUCCHs with the same priority.

Case 5: it is not expected that a same PUSCH is selected for HARQ-ACK transmission for multiple PUCCHs carrying HARQ-ACK with the same priority.

In the embodiments, it is determined that there is no case where a same PUSCH is selected for HARQ-ACK transmission for multiple PUCCHs carrying HARQ-ACK with the same priority.

In an optional embodiment, for the way 2, the selection of the PUSCH with the physical layer priority same as the physical layer priority of the PUCCH from the plurality of PUSCHs includes one of the following schemes.

Scheme 1: if a plurality of PUSCHs have the priority same as the priority of the PUCCH, selecting one PUSCH from the plurality of PUSCHs with the priority same as the priority of the PUCCH according to the preset selection rule.

Scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling.

In the embodiments, if there is no PUSCH with a priority same as the priority of the PUCCH, and it is determined according to the appointed rule or configuration signaling that the UCI on the PUCCH is allowed to be communicated on a PUSCH with a priority different from priority of the PUCCH, one PUSCH is selected from the PUSCHs with priorities different from the priority of the PUCCH according to the preset selection rule; and/or, if there is no PUSCH with a priority same as the priority of the PUCCH, and it is determined according to the appointed rule or configuration signaling that the UCI on the PUCCH is not allowed to be communicated on a PUSCH with a priority different from the priority of the PUCCH, the PUCCH is dropped or the multiple PUSCHs are dropped.

Scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

During implementation, for example, when a PUCCH with the low priority overlaps with a plurality of PUSCHs, a PUSCH with a low priority is preferentially selected for transmission of the UCI on the PUCCH with the low priority, where the PUSCH with the low priority does not overlap with a PUSCH with the high priority on the carrier on which the PUSCH with the low priority is located (i.e., it will not be cancelled by the transmission of PUSCH with the high priority).

In an optional embodiment, the preset selection rule includes any one or more of the following.

Rule 1: in a case that there is a PUSCH with A-CSI in the plurality of PUSCHs, selecting the PUSCH with A-CSI.

Rule 2: in a case that there is no PUSCH with A-CSI in the plurality of PUSCHs and there is a PUSCH of a first type, selecting the PUSCH of the first type, where the PUSCH of the first type is a PUSCH with a PDCCH scheduling.

Rule 3: in a case that there is no PUSCH with A-CSI in the plurality of PUSCHs and there is only a PUSCH of a second type, selecting the PUSCH of the second type, where the PUSCH of the second type is a PUSCH without a PDCCH scheduling.

Rule 4: while selecting the PUSCH of the first type, in a case that there are a plurality of PUSCHs of the first type communicated over a plurality of carriers, or while selecting the PUSCH of the second type, in a case that there are a plurality of PUSCHs of the second type communicated over a plurality of carriers, selecting a PUSCH on a carrier based on a carrier index.

Optionally, the PUSCH on a carrier with the smallest carrier index is selected.

Rule 5: in a case that there are a plurality of PUSCHs communicated on a plurality of carriers and having different SCSs, selecting a PUSCH in the earliest one of slots where the plurality of PUSCHs communicated on the plurality of carriers are located.

Rule 6: while selecting the PUSCH on the carrier according to the carrier index, in a case that there are a plurality of PUSCHs that do not overlap in time domain on the selected carrier, selecting a PUSCH with the earliest start symbol from the plurality of PUSCHs.

During implementation, the preset selection rule includes: for the PUSCHs that overlap with the PUCCH in time domain, if there is a PUSCH with A-CSI, this PUSCH with A-CSI is preferentially selected; otherwise (that is, there is no PUSCH with A-CSI), if there is both PUSCH with DCI scheduling and PUSCH without corresponding DCI (such as CG PUSCH, SP-CSI PUSCH, etc.), the PUSCH with DCI scheduling is preferentially selected; if there is only one type of PUSCH (PUSCH with DCI scheduling, or PUSCH without corresponding DCI) and there are multiple PUSCHs on multiple carriers overlapping with the PUCCH, the PUSCH on the carrier with the smallest carrier index is preferentially selected; if multiple TDM PUSCHs overlap with the PUCCH on a selected carrier, the PUSCH with the earliest start symbol is preferentially selected.

If the PUSCHs on multiple carriers have different SCSs, after determining that there is no PUSCH with A-CSI, if there are multiple PUSCHs with different physical layer priorities in the earliest slot among the slots where the PUSCHs on multiple carriers are located, the selection is made according to the rules in the embodiments.

Based on the overlapping of time domain resources between PUCCH and PUSCHs as shown in Fig. 8, embodiments of the disclosure provide an embodiment of selecting a PUSCH to carry UCI. LP represents a low priority, HP represents a high priority, AN is the abbreviation of HARQ-ACK, and different PUSCHs are on different carriers. One PUSCH may be on the same carrier as the PUCCH, or all the PUSCHs may be on different carriers than the PUCCH. The specific selection methods are as follows.
1) PUSCH is selected according to the rule 1.
   During implementation, HP PUSCH3 with A-CSI is selected from a plurality of PUSCHs overlapping with PUCCH in time domain resources to communicate UCI on the PUCCH, and the PUCCH will not be communicated.
2) PUSCH is selected according to the rule 2.

During implementation, the PUSCHs with the same priority as the PUCCH are determined from the PUSCH1 to PUSCH3 overlapping with the PUCCH in time domain resources, namely PUSCH2 and PUSCH3 are determined, the HP PUSCH3 with A-CSI is selected from the PUSCH2 and PUSCH3 to communicate UCI on the PUCCH, and the PUCCH will not be communicated.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

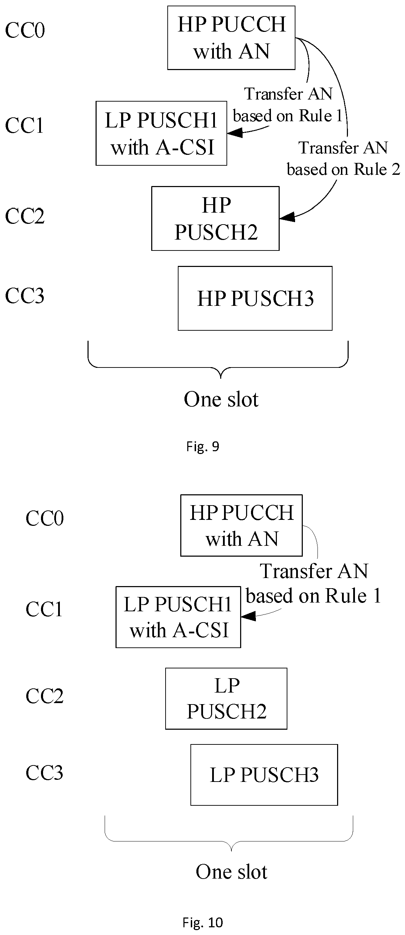

Based on the overlapping of time domain resources between PUCCH and PUSCHs as shown in Fig. 9, embodiments of the disclosure provide an embodiment of selecting a PUSCH to carry UCI. LP represents a low priority, HP represents a high priority, AN is the abbreviation of HARQ-ACK, different PUSCHs are on different carriers, one PUSCH may be on the same carrier as the PUCCH, or all the PUSCHs may be on different carriers than the PUCCH. The specific selection methods are as follows.
1) PUSCH is selected according to the rule 1.
   The LP PUSCH1 with A-CSI is selected from the plurality of PUSCHs overlapping with the PUCCH in time domain resources to communicate UC! of PUCCH, and the PUCCH will not be communicated.
2) PUSCH is selected according to the rule 2.

The PUSCHs with the same priority as PUCCH are determined from PUSCH1 to PUSCH3 overlapping with the PUCCH in time domain resources, namely PUSCH2 and PUSCH3 are determined. If there is no PUSCH with A-CSI in PUSCH2 and PUSCH3, and PUSCHs on CC2 and CC3 are of the same type (for example, both are PUSCHs with corresponding DCI, or both are PUSCHs without corresponding DCI), HP PUSCH2 on CC2 is selected for UCI transmission according to the CC index.

In a case that there is no PUSCH with A-CSI in PUSCH2 and PUSCH3, and the PUSCHs on CC2 and CC3 are of different types, for example, the PUSCH on CC3 is a PUSCH with corresponding DCI and the PUSCH on CC2 is a PUSCH without corresponding DCI, the HP PUSCH3 on CC3 is selected for UCI transmission.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

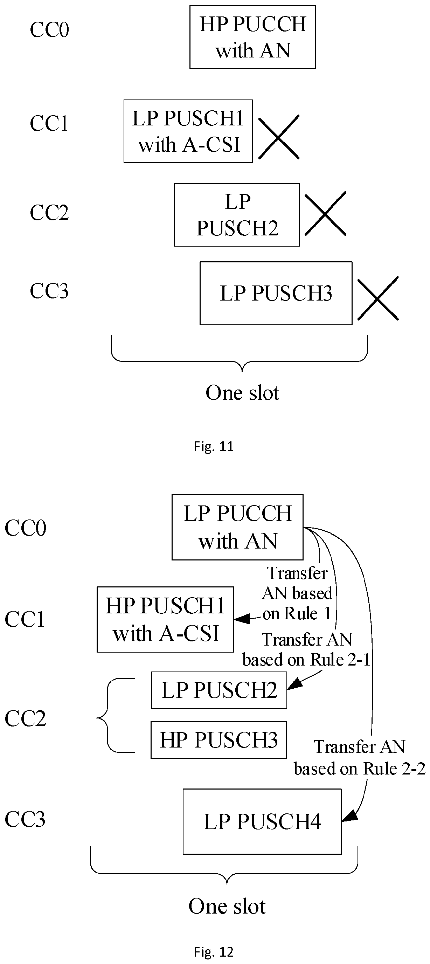

Based on the overlapping time domain resources of PUCCH and PUSCH as shown in Fig. 10 and Fig. 11, embodiments of the disclosure provide an embodiment of selecting a PUSCH to carry UCI. LP represents a low priority, HP represents a high priority, and AN is the abbreviation of HARQ-ACK. Different PUSCHs are on different carriers, and one PUSCH may be on the same carrier as the PUCCH, or all the PUSCHs may be on different carriers than the PUCCH. The specific selection methods are as follows.
1) PUSCH is selected according to the rule 1.
   As shown in Fig. 10, the LP PUSCH1 with A-CSI is selected from the plurality of PUSCHs overlapping with the PUCCH in time domain resources, to communicate UC! of PUCCH, and the PUCCH will not be communicated.
2) PUSCH is selected according to the rule 2.

It is determined that there is no PUSCH with the same priority as the PUCCH in the PUSCH1 to PUSCH3 overlapping with the PUCCH in time domain resources, and according to the appointed rules or configuration signaling, the UCI on the PUCCH is supported to be transferred to the PUSCH with a priority different from that of the PUCCH for transmission, the LP PUSCH1 with A-CSI is selected from the PUSCH1 to PUSCH3 to communicate the UCI on the PUCCH, and the PUCCH will not be communicated, as shown in Fig. 10.

In a case that there is no PUSCH with the same priority as the PUCCH and according to the appointed rule or configuration signaling, the UCI on the PUCCH is not supported to be transferred to the PUSCH with a priority different from that of the PUCCH for transmission, only the HP PUCCH with AN is communicated, and all the LP PUCCHs that overlap with the PUCCH are dropped, as shown in Fig. 11.

In the above embodiments, only the PUCCH with the high priority is used as an example, and the implementation for the PUCCH with the low priority is similar, which is not repeated herein. The above embodiments only take the PUCCH with AN as an example, and the implementation for the PUCCH with other UCI is similar, which is not repeated herein. The above embodiments only take the overlap in one slot as an example, if a time unit for multiplexing transmission between uplink channels with different priorities is not a slot, but a sub-slot, then the slot is replaced with the sub-slot, the implementation for the sub-slot is similar which will not be repeated herein.

Based on the overlapping of PUCCH and PUSCH as shown in Fig. 12, LP represents a low priority, HP represents a high priority, and AN is the abbreviation of HARQ-ACK. One PUSCH is on the same carrier as the PUCCH, or all the PUSCHs are on different carriers than the PUCCH. The PUSCH is selected for UCI transmission according to the embodiments of the disclosure. The specific selection methods are as follows.
1) PUSCH is selected according to the rule 1.
   The HP PUSCH with A-CSI on CC1 is selected to carry the LP UCI without distinguishing priorities.
2) PUSCH is selected according to the rule 2.

In a first case (rule 2-1), only the priorities are distinguished, and the PUSCH is selected from LP PUSCHs according to the preset selection rule in the related art, then according to the CC index, the LP PUSCH on CC2 is selected to communicate the LP UCI.

In a second case (rule 2-2), the LP PUSCH that will not be cancelled due to the HP PUSCH is further selected from the LP PUSCHs in the case of prioritization, that is, the PUSCH with no HP PUSCH overlapping with it on the same carrier is selected. In this case, the LP PUSCH on CC3 is selected to communicate the LP UCI.

In a third embodiment, a system for UCI transmission on PUSCH is provided. The system may be applied to a system including a terminal and a network side device. The operations of the systems are described as follows.

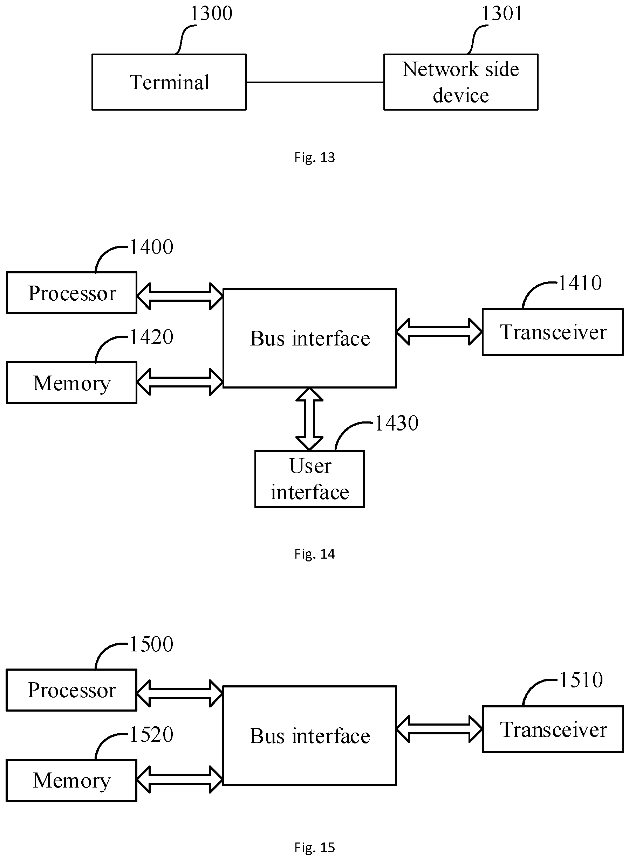

As shown in Fig. 13, the system includes a terminal 1300 and a network side device 1301. After the terminal and the network side device select one PUSCH to carry UCI according to the same rule, the terminal sends the UCI on PUCCH over the selected PUSCH, and the network side device receives the UC! over the selected PUSCH, so as to ensure that the terminal and the network side device have the same selection of the PUSCH for UCI transmission, to thereby ensure the normal transmission of the UCI.

The rules in this embodiment include preset selection rules or selection of the PUSCH with the physical layer priority same as the physical layer priority of the PUCCH from the plurality of PUSCHs. The specific implementations of selecting the PUSCH to carry the UCI according to the rules refer to the above-mentioned embodiments for the terminal or network device side, which will not be repeated herein.

In a fourth embodiment, based on the same inventive concept, a terminal is provided in the disclosure. Since the terminal is a terminal corresponding to the method of the embodiment of the disclosure, and the principle of solving the problem of the terminal is similar to the method of the disclosure, in this case, the implementation of the terminal refers to the implementation of the method, which will not be repeated herein.

As shown in Fig. 14, embodiments of the disclosure further provide a terminal. The terminal includes a memory, a transceiver, and a processor(s).

The transceiver 1410 is configured for receiving and sending data under the control of the processor(s) 1400.

As shown in Fig. 14, the bus architecture may include any number of interconnected buses and bridges, specifically one or more processors represented by the processor(s) 1400 and various circuits of the memory represented by the memory 1420 are linked together. The bus architecture may also link together various other circuits, such as peripherals, voltage regulators, and power management circuits, which are well known in the art and therefore will not be described further herein. The bus interface provides interfaces. The transceiver 1410 may be a number of elements, including a transmitter and a receiver, providing a means for communicating with various other devices over transmission medium including wireless channels, wired channels, fiber optic cables, and the like. For different UEs, the user interface 1430 may also be an interface capable of externally and internally connecting the required devices, and the connected devices include but are not limited to a keypad, a display, a speaker, a microphone, a joystick, and the like.

The processor(s) 1400 is responsible for managing the bus architecture and general processing, and the memory 1420 may store data used by the processor(s) 1400 in performing operations.

Optionally, the processor(s) 1400 may be a central processing unit (CPU), an application specific integrated circuit (ASIC), a field-programmable gate array (FPGA) or a complex programmable logic device (CPLD), the processor may also use a multi-core architecture.

The processor(s) is configured to execute any one of the methods provided by the embodiments of the disclosure according to the obtained executable instructions by invoking computer programs stored in the memory. The processor and memory may also be physically separated.

The processor(s) is configured for reading the computer programs in the memory and performing the following operations:
determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and communicating the UCI over the selected PUSCH.

In an optional embodiment, the processor is specifically configured to execute:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the processor is further configured to execute:
determining that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the processor is specifically configured to execute one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or configuration signaling, the processor is further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the processor is further configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs, and there is a PUSCH of a first type, selecting the PUSCH of the first type, where the PUSCH of the first type is a PUSCH with a PDCCH scheduling;
in a case that there is no PUSCH with A-CSI in the plurality of PUSCHs, and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

It should be noted herein that the above terminal provided by the embodiments of the disclosure is capable of realizing all of the method steps in the above method embodiments and is capable of achieving the same technical effect, and the same parts of the embodiments as the method embodiments and the beneficial effects will not be specifically elaborated herein.

In a fifth embodiment, based on the same inventive concept, a network side device is provided in the disclosure. Since the device is a device corresponding to the method of the embodiment of the disclosure, and the principle of solving the problem of the device is similar to the method of the disclosure, in this case, the implementation of the device refers to the implementation of the method, which will not be repeated herein.

As shown in Fig. 15, embodiments of the disclosure further provide a network side device including the following.

A transceiver 1510 is configured for receiving and sending data under the control of a processor(s) 1500.

As shown in Fig. 15, the bus architecture may include any number of interconnected buses and bridges, specifically one or more processors represented by a processor(s) 1500 and various circuits of a memory represented by a memory 1520 are linked together. The bus architecture may also link together various other circuits, such as peripherals, voltage regulators, and power management circuits, which are well known in the art and therefore will not be described further herein. The bus interface provides interfaces. The transceiver 1510 may be a number of elements, including a transmitter and a receiver, providing a means for communicating with various other devices over transmission medium including wireless channels, wired channels, fiber optic cables, and the like. The processor(s) 1500 is responsible for managing the bus architecture and general processing, and the memory 1520 may store data used by the processor(s) 1500 in performing operations.

The processor(s) 1500 may be a central processing unit (CPU), an application specific integrated circuit (ASIC), a field-programmable gate array (FPGA) or a complex programmable logic device (CPLD), the processor may also use a multi-core architecture.

The processor is configured for reading the computer programs in the memory and performing the following operations:
determining that a PUCCH carrying UCI overlaps with a plurality of PUSCHs with different physical layer priorities in time domain resources; selecting one PUSCH from the plurality of PUSCHs according to a preset selection rule, or selecting a PUSCH with a physical layer priority same as a physical layer priority of the PUCCH from the plurality of PUSCHs; and receiving the UC! over the selected PUSCH.

In an optional embodiment, the processor is specifically configured to execute:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the processor is further configured to execute:
determining that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the processor is specifically configured to execute one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, after determining whether the UCI on the PUCCH is allowed to be communicated on the PUSCH with the priority different from the priority of the PUCCH according to the appointed rule or configuration signaling, the processor is further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the processor is further configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs, and there is a PUSCH of a first type, selecting the PUSCH of the first type, where the PUSCH of the first type is a PUSCH with a PDCCH scheduling;
in a case that there is no PUSCH with A-CSI in the plurality of PUSCHs, and there is only a PUSCH of a second type, selecting the PUSCH of the second type, where the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

It should be noted herein that the above network side device provided by the embodiments of the disclosure is capable of realizing all of the method steps realized by the above method embodiments and is capable of achieving the same technical effect, and the same parts of the embodiments as the method embodiments and the beneficial effects will not be specifically elaborated herein.

In a sixth embodiment, based on the same inventive concept, an apparatus for UCI transmission on PUSCH is further provided in the disclosure. Since the apparatus is an apparatus corresponding to the method of the embodiments of the disclosure, and the principle of the apparatus solving the problem is similar to the method, the implementation of the apparatus can refer to the implementation of the method, which will not be repeated herein.

It should be noted that the division of the units in the embodiments of the disclosure is schematic and is only a logical functional division, and there may be another division when actually realized. In addition, the various functional units in various embodiments of the disclosure may be integrated in a single processing unit, or each unit may physically and separately exist, or two or more units may be integrated in a single unit. The above integrated units may be realized either in the form of hardware or in the form of software functional units.

The integrated units may be stored in a processor readable storage medium when implemented as a software functional unit and sold or used as a separate product. Based on this understanding, the technical solutions of the disclosure may be embodied essentially or in part as a contribution to the related art, or all or part of the technical solutions may be embodied in the form of a software product that is stored in a storage medium including a number of instructions for causing a computer device (which may be a personal computer, a server, or a network device, etc.) or a processor to perform part or all of the methods described in the various embodiments of the disclosure. The above mentioned storage medium includes: USB flash disks, removable hard disks, read-only memory (ROM), random access memory (RAM), magnetic disks, or CD-ROMs, and other medium storing program codes.

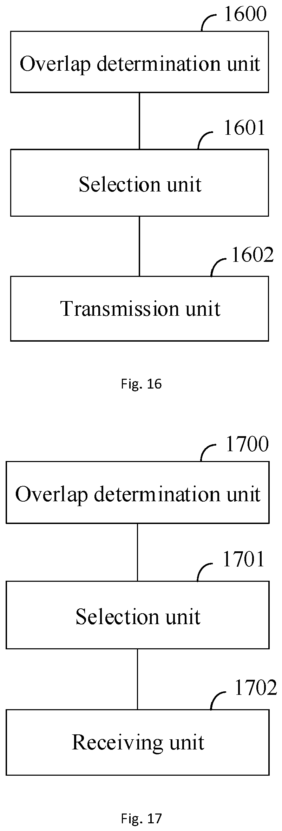

As shown in Fig. 16, the apparatus includes:
an overlap determination unit 1600, configured for determining that a PUCCH carrying UCI overlaps with a plurality of PUSCHs with different physical layer priorities in time domain resources;
a selection unit 1601, configured for selecting one PUSCH from the plurality of PUSCHs according to a preset selection rule, or selecting a PUSCH with a physical layer priority same as a physical layer priority of the PUCCH from the plurality of PUSCHs; and
a transmission unit 1602, configured for communicating the UCI over the selected PUSCH.

In an optional embodiment, the selection unit is specifically configured for:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the selection unit is further configured for:
determining that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the selection unit is specifically configured for selecting the PUSCH by one of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, the selection unit is further configured for:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the selection unit is further configured for:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs, and there is a PUSCH of a first type, selecting the PUSCH of the first type, where the PUSCH of the first type is a PUSCH with a PDCCH scheduling;
in a case that there is no PUSCH with A-CSI in the plurality of PUSCHs, and there is only a PUSCH of a second type, selecting the PUSCH of the second type, where the PUSCH of the second type is a PUSCH without a PDCCH scheduling;
in an optional embodiment, in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

It should be noted herein that the above-mentioned device provided by the embodiments of the disclosure is capable of realizing all of the method steps realized by the above method embodiments and is capable of achieving the same technical effect, and the same parts of the embodiments as the method embodiments and the beneficial effects will not be specifically elaborated herein.

In a seventh embodiment, based on the same inventive concept, an apparatus for UCI transmission on PUSCH is further provided in the disclosure. Since the apparatus is an apparatus corresponding to the method of the embodiments of the disclosure, and the principle of the device solving the problem is similar to the method, the implementation of the device can refer to the implementation of the method, which will not be repeated herein.

It should be noted that the division of the units in the embodiments of the disclosure is schematic and is only a logical functional division, and there may be another division when actually realized. In addition, the various functional units in various embodiments of the disclosure may be integrated in a single processing unit, or each unit may physically and separately exist, or two or more units may be integrated in a single unit. The above integrated units may be realized either in the form of hardware or in the form of software functional units.

The integrated units may be stored in a processor readable storage medium when implemented as a software functional unit and sold or used as a separate product. Based on this understanding, the technical solutions of the disclosure may be embodied essentially or in part as a contribution to the related art, or all or part of the technical solutions may be embodied in the form of a software product that is stored in a storage medium including a number of instructions for causing a computer device (which may be a personal computer, a server, or a network device, etc.) or a processor to perform part or all of the methods described in the various embodiments of the disclosure. The above mentioned storage medium includes: USB flash disks, removable hard disks, read-only memory (ROM), random access memory (RAM), magnetic disks, or CD-ROMs, and other medium storing program codes.

As shown in Fig. 17, the device includes:
an overlap determination unit 1700, configured for determining that a PUCCH carrying UCI overlaps with a plurality of PUSCHs with different physical layer priorities in time domain resources;
a selection unit 1701, configured for selecting one PUSCH from the plurality of PUSCHs according to a preset selection rule, or selecting a PUSCH with a physical layer priority same as a physical layer priority of the PUCCH from the plurality of PUSCHs; and
a receiving unit 1702, configured for receiving the UC! over the selected PUSCH.

In an optional embodiment, the selection unit is specifically configured for:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

In an optional embodiment, the PUCCH carrying the UCI is one of a plurality of time division multiplexing (TDM) PUCCHs.

In an optional embodiment, before selecting one PUSCH from the plurality of PUSCHs according to the preset selection rule, or selecting the PUSCH with the physical layer priority same as the physical layer priority of the PUCCH from the plurality of PUSCHs, the selection unit is further configured for:
determining that there is no case where a same PUSCH is selected for UCI transmission for multiple PUCCHs with different priorities; or
determining that there is no case where a same PUSCH is selected for HARQ-ACK transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

In an optional embodiment, the selection unit is specifically configured for:
in a case that there are multiple PUSCHs with the priority same as the priority of the PUCCH, selecting one PUSCH from the multiple PUSCHs with the priority same as the priority of the PUCCH according to the preset selection rule.

In an optional embodiment, the selection unit is specifically configured for selecting the PUSCH by any of the following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with a priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with a priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

In an optional embodiment, the selection unit is further configured for:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

In an optional embodiment, the selection unit is further configured for:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

In an optional embodiment, the preset selection rule includes any one or more of the following:
in a case that there is a PUSCH with A-CSI in the plurality of PUSCHs, selecting the PUSCH with A-CSI;
in a case that there is no PUSCH with A-CSI in the plurality of PUSCHs, and there is a PUSCH of a first type, selecting the PUSCH of the first type, where the PUSCH of the first type is a PUSCH with a PDCCH scheduling;
in a case that there is no PUSCH with A-CSI in the plurality of PUSCHs, and there is only a PUSCH of a second type, selecting the PUSCH of the second type, where the PUSCH of the second type is a PUSCH without a PDCCH scheduling;
in an optional embodiment, in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

It should be noted herein that the above-mentioned apparatus provided by the embodiments of the disclosure is capable of realizing all of the method steps realized by the above method embodiments and is capable of achieving the same technical effect, and the same parts of the embodiments as the method embodiments and the beneficial effects will not be specifically elaborated herein.

Embodiments of the disclosure further provide a computer storage medium. The processor readable storage medium may be any available medium or data storage device that a processor is able to store or read, including but is not limited to, magnetic memories (e.g., floppy disks, hard disks, magnetic tapes, magnetic optical discs (MO), etc.), optical memories (e.g., CDs, DVDs, BDs, HVDs, etc.), and semiconductor memories (e.g., ROMs, EPROMs, EEPROMs, non-transitory memories (NAND FLASH), solid-state disks (SSDs)), and the like.

The embodiments further provide a computer storage medium, and the programs are executed by a processor to execute:
determining that a PUCCH carrying a UCI overlaps with a plurality of PUSCHs with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs; and
communicating the UCI over the selected PUSCH.

Embodiments of the disclosure further provide a computer storage medium. The processor readable storage medium may be any available medium or data storage device that a processor is able to store or read, including but is not limited to, magnetic memories (e.g., floppy disks, hard disks, magnetic tapes, magnetic optical discs (MO), etc.), optical memories (e.g., CDs, DVDs, BDs, HVDs, etc.), and semiconductor memories (e.g., ROMs, EPROMs, EEPROMs, non-transitory memories (NAND FLASH), solid-state disks (SSDs)), and the like.

The embodiments further provide a computer storage medium, and the programs are executed by a processor to execute:
determining that a PUCCH carrying UCI overlaps with a plurality of PUSCHs with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs;
receiving the UC! over the selected PUSCH.

The disclosure is described above with reference to block diagrams and/or flowchart illustrations illustrating methods, devices (systems) and/or computer program products according to embodiments of the disclosure. It should be understood that a block of the block diagrams and/or flowchart illustrations, and combinations of blocks of the block diagrams and/or flowchart illustrations, can be implemented by computer program instructions. These computer program instructions may be provided to a general computer, a processor of a special computer and/or other programmable data processing apparatus to produce a machine such that the instructions executed via the computer processor and/or other programmable data processing apparatus create methods of implementing the functions/acts specified in the block diagrams and/or flowchart blocks.

Accordingly, the disclosure may also be implemented in hardware and/or software (including firmware, resident software, microcode, etc.). Even further, the disclosure may take the form of a computer program product on a computer-usable or computer-readable storage medium having computer-usable or computer-readable program code implemented in the medium to be used by or in conjunction with an instruction execution system. In the context of the disclosure, the computer-usable or computer-readable medium may be any medium that may contain, store, communicate, transmit, or transmit a program to be used by or in conjunction with an instruction-execution system, device, or apparatus.

Obviously, those skilled in the art can make various changes and variations to the disclosure without departing from the spirit and scope of the disclosure. Thus, if these modifications and variations of the disclosure fall within the scope of the present claims and their technical equivalents, the disclosure is intended to include such modifications and variations.

## Claims

1. A method for uplink control information, UCI, transmission on physical uplink shared channel, PUSCH, comprising:
determining that a physical uplink control channel, PUCCH, carrying UCI overlaps with a plurality of PUSCHs with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs; and
communicating the UCI over the selected PUSCH.

2. The method according to claim 1, wherein the selecting one PUSCH from the plurality of PUSCHs according to the preset selection rule, or selecting the PUSCH with the physical layer priority same as the physical layer priority of the PUCCH from the plurality of PUSCHs, comprises:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

3. The method according to claim 1, wherein the PUCCH carrying the UCI is one of a plurality of time division multiplexing, TDM, PUCCHs.

4. The method according to claim 1, wherein before selecting one PUSCH from the plurality of PUSCHs according to the preset selection rule, or selecting the PUSCH with the physical layer priority same as the physical layer priority of the PUCCH from the plurality of PUSCHs, the method further comprises:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

5. The method according to claim 1, wherein the selecting the PUSCH with the physical layer priority same as the physical layer priority of the PUCCH from the plurality of PUSCHs, comprises one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

6. The method according to claim 5, wherein the determining whether the UCI on the PUCCH is allowed to be communicated on the PUSCH with the priority different from the priority of the PUCCH according to the appointed rule or the configuration signaling, the method further comprises:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

7. The method according to claim 5, wherein the selecting, from the plurality of PUSCHs, the PUSCH with the physical layer priority same as the physical layer priority of the PUCCH and not overlapping in time domain with the PUSCH with a different priority on the carrier for PUSCH transmission, comprises:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

8. The method according to any one of claims 1-7, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH, scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different sub-carrier spacings, SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

9. A method for uplink control information, UCI, transmission on physical uplink shared channel, PUSCH, comprising:
determining that a physical uplink control channel, PUCCH, carrying UCI overlaps with a plurality of PUSCHs with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs; and
receiving the UC! over the selected PUSCH.

10. The method according to claim 9, wherein the selecting one PUSCH from the plurality of PUSCHs according to the preset selection rule, or selecting the PUSCH with the physical layer priority same as the physical layer priority of the PUCCH from the plurality of PUSCHs, comprises:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

11. The method according to claim 9, wherein the PUCCH carrying the UCI is one of a plurality of time division multiplexing, TDM, PUCCHs.

12. The method according to claim 9, wherein before selecting one PUSCH from the plurality of PUSCHs according to the preset selection rule, or selecting the PUSCH with the physical layer priority same as the physical layer priority of the PUCCH from the plurality of PUSCHs, the method further comprises:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

13. The method according to claim 9, wherein the selecting the PUSCH with the physical layer priority same as the physical layer priority of the PUCCH from the plurality of PUSCHs, comprises one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

14. The method according to claim 13, wherein the determining whether the UCI on the PUCCH is allowed to be communicated on the PUSCH with the priority different from the priority of the PUCCH according to the appointed rule or the configuration signaling, the method further comprises:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

15. The method according to claim 13, wherein the selecting, from the plurality of PUSCHs, the PUSCH with the physical layer priority same as the physical layer priority of the PUCCH and not overlapping in time domain with the PUSCH with a different priority on the carrier for PUSCH transmission, comprises:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

16. The method according to any one of claims 9-15, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different sub-carrier spacings, SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

17. A terminal, comprising:
a memory, configured for storing computer programs;
a transceiver, configured for receiving and sending data under control of a processor; and
the processor, configured for reading the computer programs in the memory to execute:
determining that a physical uplink control channel, PUCCH, carrying uplink control information, UCI, overlaps with a plurality of physical uplink shared channels, PUSCHs, with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs; and
communicating the UCI over the selected PUSCH.

18. The terminal according to claim 17, wherein the processor is configured to execute:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

19. The terminal according to claim 17, wherein the PUCCH carrying the UCI is one of a plurality of time division multiplexing, TDM, PUCCHs.

20. The terminal according to claim 17, wherein before selecting one PUSCH from the plurality of PUSCHs according to the preset selection rule, or selecting the PUSCH with the physical layer priority same as the physical layer priority of the PUCCH from the plurality of PUSCHs, the processor is further configured to execute:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

21. The terminal according to claim 17, wherein the processor is configured to execute one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

22. The terminal according to claim 21, wherein the processor is further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

23. The terminal according to claim 21, wherein the processor is further configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

24. The terminal according to any one of claims 17-23, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different sub-carrier spacings, SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

25. A network side device, comprising:
a memory, configured for storing computer programs;
a transceiver, configured for receiving and transmitting data under control of a processor; and
the processor, configured for reading the computer programs in the memory to execute:
determining that a physical uplink control channel, PUCCH, carrying uplink control information, UCI, overlaps with a plurality of physical uplink shared channels, PUSCHs, with different physical layer priorities in time domain resources;
selecting one PUSCH from the plurality of PUSCHs according to a preset selection rule, or selecting a PUSCH with a physical layer priority same as a physical layer priority of the PUCCH from the plurality of PUSCHs; and
receiving the UCI over the selected PUSCH.

26. The device according to claim 25, wherein the processor is configured to execute:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

27. The device according to claim 25, wherein the PUCCH carrying the UCI is one of a plurality of time division multiplexing, TDM, PUCCHs.

28. The device according to claim 25, wherein before selecting one PUSCH from the plurality of PUSCHs according to the preset selection rule, or selecting the PUSCH with the physical layer priority same as the physical layer priority of the PUCCH from the plurality of PUSCHs, the processor is further configured to execute:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

29. The device according to claim 25, wherein the processor is configured to execute one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

30. The device according to claim 29, wherein the processor is further configured to execute:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

31. The device according to claim 29, wherein the processor is configured to execute:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

32. The device according to any one of claims 25-31, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different sub-carrier spacings, SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

33. An apparatus for uplink control information, UCI, transmission on physical uplink shared channel, PUSCH, comprising:
an overlap determination unit, configured for determining that a physical uplink control channel, PUCCH, carrying UCI overlaps with a plurality of PUSCHs with different physical layer priorities in time domain resources;
a selection unit, configured for selecting one PUSCH from the plurality of PUSCHs according to a preset selection rule, or selecting a PUSCH with a physical layer priority same as a physical layer priority of the PUCCH from the plurality of PUSCHs; and
a transmission unit, configured for communicating the UCI over the selected PUSCH.

34. The apparatus according to claim 33, wherein the selection unit is configured for:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

35. The apparatus according to claim 33, wherein the PUCCH carrying the UCI is one of a plurality of time division multiplexing, TDM, PUCCHs.

36. The apparatus according to claim 33, wherein before selecting one PUSCH from the plurality of PUSCHs according to the preset selection rule, or selecting the PUSCH with the physical layer priority same as the physical layer priority of the PUCCH from the plurality of PUSCHs, the selection unit is further configured for:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

37. The apparatus according to claim 33, wherein the selection unit is configured for selecting the PUSCH by one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

38. The apparatus according to claim 37, wherein the selection unit is further configured for:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

39. The apparatus according to claim 37, wherein the selection unit is further configured for:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

40. The apparatus according to any one of claims 33-39, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

41. An apparatus for uplink control information, UCI, transmission on physical uplink shared channel, PUSCH, comprising:
an overlap determination unit, configured for determining that a physical uplink control channel, PUCCH, carrying UCI overlaps with a plurality of PUSCHs with different physical layer priorities in time domain resources;
a selection unit, configured for selecting one PUSCH from the plurality of PUSCHs according to a preset selection rule, or selecting a PUSCH with a physical layer priority same as a physical layer priority of the PUCCH from the plurality of PUSCHs; and
a receiving unit, configured for receiving the UCI over the selected PUSCH.

42. The apparatus according to claim 41, wherein the selection unit is configured for:
in a case that the PUCCH has a high priority, selecting the PUSCH with the physical layer priority same as the physical layer priority of the PUCCH from the plurality of PUSCHs;
in a case that the PUCCH has a low priority, selecting one PUSCH from the plurality of PUSCHs according to the preset selection rule, or selecting the PUSCH with the physical layer priority same as the physical layer priority of the PUCCH from the plurality of PUSCHs.

43. The apparatus according to claim 41, wherein the PUCCH carrying the UCI is one of a plurality of time division multiplexing, TDM, PUCCHs.

44. The apparatus according to claim 41, wherein before selecting one PUSCH from the plurality of PUSCHs according to the preset selection rule, or selecting the PUSCH with the physical layer priority same as the physical layer priority of the PUCCH from the plurality of PUSCHs, the selection unit is further configured for:
determining that there is no case where a same PUSCH is selected for UCI transmission for multiple PUCCHs with different priorities; or
determining that there is no case where a same PUSCH is selected for hybrid automatic repeat request-acknowledgment, HARQ-ACK, transmission for multiple PUCCHs carrying HARQ-ACK with different priorities; or
determining that there are at most two HARQ-ACK sequences with different priorities which are communicated on a same PUSCH; or
determining that there is no case where a same PUSCH is selected for UCI transmission for multiple PUCCHs with a same priority; or
determining that there is no case where a same PUSCH is selected for HARQ-ACK transmission for multiple PUCCHs carrying HARQ-ACK with a same priority.

45. The apparatus according to claim 41, wherein the selection unit is configured for selecting the PUSCH by one of following schemes:
scheme 1: in a case that there are multiple PUSCHs with the priority same as the priority of the PUCCH, selecting one PUSCH from the multiple PUSCHs with the priority same as the priority of the PUCCH according to the preset selection rule;
scheme 2: in response to determining that there is no PUSCH with the priority same as the priority of the PUCCH among the plurality of PUSCHs, selecting one PUSCH from the plurality of PUSCHs with priorities different from the priority of the PUCCH according to the preset selection rule; or, in response to determining that there is no PUSCH with the priority same as the priority of the PUCCH among the plurality of PUSCHs, determining whether the UCI on the PUCCH is allowed to be communicated on a PUSCH with a priority different from the priority of the PUCCH according to an appointed rule or a configuration signaling; or
scheme 3: selecting, from the plurality of PUSCHs, a PUSCH with the physical layer priority same as the physical layer priority of the PUCCH and not overlapping in time domain with a PUSCH with a different priority on a carrier for PUSCH transmission.

46. The apparatus according to claim 45, wherein the selection unit is further configured for:
in response to determining that the UCI on the PUCCH is allowed to be communicated on the PUSCH with the priority different from the priority of the PUCCH, selecting one PUSCH from the plurality of PUSCHs with priorities different from the priority of the PUCCH according to the preset selection rule; and/or
in response to determining that the UCI on the PUCCH is not allowed to be communicated on the PUSCH with the priority different from the priority of the PUCCH, dropping the PUCCH or the plurality of PUSCHs.

47. The apparatus according to claim 45, wherein the selection unit is configured for:
in a case that in the plurality of PUSCHs, there are multiple PUSCHs have the physical layer priority same as the physical layer priority of the PUCCH and do not overlap in time domain with a PUSCH having a physical layer priority different from the physical layer priority of the multiple PUSCHs on the carrier for PUSCH transmission, selecting one PUSCH, according to the scheme 1 or scheme 2, from the multiple PUSCHs that have the physical layer priority same as the physical layer priority of the PUCCH and do not overlap in time domain with the PUSCH having a physical layer priority different from the physical layer priority of the multiple PUSCHs on the carrier for PUSCH transmission.

48. The apparatus according to any one of claims 41-47, wherein the preset selection rule comprises any one or more of following:
in a case that there is a PUSCH with aperiodic channel state information, A-CSI, in the plurality of PUSCHs, selecting the PUSCH with A-CSI;
in a case that there is no PUSCH with A-CSI in the plurality of PUSCHs, and there is a PUSCH of a first type, selecting the PUSCH of the first type, wherein the PUSCH of the first type is a PUSCH with a physical downlink control channel, PDCCH scheduling;
in a case that there is no PUSCH with A-CSI in the plurality of PUSCHs, and there is only a PUSCH of a second type, selecting the PUSCH of the second type, wherein the PUSCH of the second type is a PUSCH without a PDCCH scheduling;
in a case that there are a plurality of PUSCHs of the first type communicated over a plurality of carriers while selecting the PUSCH of the first type, or in a case that there are a plurality of PUSCHs of the second type communicated over a plurality of carriers while selecting the PUSCH of the second type, selecting a PUSCH on a carrier based on a carrier index;
in a case that there are a plurality of PUSCHs communicated on a plurality of carriers and having different sub-carrier spacings, SCSs, selecting a PUSCH in an earliest one of slots where the plurality of PUSCHs communicated on the plurality of carriers are located; or
while selecting the PUSCH on the carrier according to the carrier index, in a case that there are multiple PUSCHs that do not overlap with each other in time domain on the selected carrier, selecting a PUSCH with an earliest start symbol from the multiple PUSCHs.

49. A processor readable storage medium, storing computer programs, and the computer programs are executed by a processor to execute the method according to any one of claims 1-8 or claims 9-16.
